# FASCICULE DE BREVET EUROPEEN

(11) **EP 1 075 175 B1**
(45) Date de publication et mention de la délivrance du brevet: **02.01.2003**
(21) Numéro de dépôt: 99940258.9
(22) Date de dépôt: 31.08.1999
(51) Int. Cl.: A01F 15/07

(54) **PRESSE A BALLES RONDES AVEC ENRUBANNEUSE INTEGREE**
RUNDBALLENPRESSE MIT INTEGRIERTER WICKELVORRICHTUNG
ROTOBALER WITH INTEGRATED STRAPPING MEMBER

(30) Priorité: 15.09.1998 FR 9811480
(43) Date de publication de la demande: 14.02.2001
(73) Titulaire: Bertrand, Viviane, 35120 St. Broladre/Dol-de-Bretagne (FR)
(72) Inventeur: BERTRAND, Viviane, F-35120 St. Broladre/Dol-de-Bretagne (FR); BERTRAND, Raymond, F-35120 St. Broladre/Dol-de-Bretagne (FR)
(86) Numéro de dépôt international: FR9902070
(87) Numéro de publication internationale: WO00015023

(56) Documents cités:
- WO-A-97/23125
- DE-A- 3 805 224
- FR-A- 2 448 282
- US-A- 5 598 690
- US-A- 5 802 805

## Description

La présente invention concerne une presse à balles rondes avec enrubanneuse intégrée.

Une presse à balles rondes est une machine agricole pour récolter des produits végétaux, en particulier des fourrages pour les animaux, qui sont enroulés et pressés automatiquement à l'intérieur d'une chambre jusqu'à l'obtention d'une balle ronde et dense.

Lorsque la récolte est conservée à l'état sec (foin, paille,...), on utilise des chambres à volume fixe ou variable. Une fois la balle formée, il faut la lier au moyen d'une ficelle, d'un filet ou analogue pour maintenir sa forme et sa densité.

Lorsque la récolte est conservée par ensilage (herbe verte ou préfannée,...), on utilise en général des chambres à volume fixe. Une fois la balle formée, il faut l'entourer d'une enveloppe de protection pour l'isoler de l'extérieur et éviter la détérioration des propriétés intrinsèques du produit végétal sous l'action de l'oxygène extérieur par exemple. On utilise à cet effet une enrubanneuse qui enroule automatiquement un film plastique tout autour de la balle.

Pour l'ensilage, on connaît des machines où l'enrubanneuse est tout simplement tirée à l'arrière de la presse à balles rondes. Ces machines ont un intérêt limité pour plusieurs raisons :
- la difficulté pour assurer un transfert des balles entre la presse et l'enrubanneuse,
- la 'nécessité de prévoir un liage intermédiaire avant de transférer la balle vers l'enrubanneuse,
- la perte de temps et de rendement occasionnée par cette opération de liage intermédiaire,
- la faible manoeuvrabilité de la machine,
- le manque de visibilité pour l'opérateur situé sur le tracteur qui tire la presse et l'enrubanneuse,
- la nécessité d'avoir un tracteur de grosse puissance,
- l'utilisation non sécurisée de la machine dans des terrains en pente, dans des petits champs et/ou dans des conditions humides, et
- l'opération supplémentaire pour le fermier qui doit délier les balles avant de distribuer le fourrage aux animaux.

On connaît du document FR-A-2 448 282 une machine selon le préambule de la revendication 1.

On connaît également du document WO 97/18 699 une presse à balles rondes avec enrubanneuse intégrée. Dans cette machine, la chambre est à volume fixe et délimitée à l'intérieur d'un carter monté pivotant sur le châssis de la presse. Concrètement, lorsqu'une balle est formée, le carter est relevé vers le haut pour dégager la balle et permettre à l'enrubanneuse de pouvoir se positionner par rapport à la balle.

Cette machine présente néanmoins des inconvénients :
- le risque de blocage de la balle dans le carter lorsque ce dernier est soulevé,
- le peu de stabilité dans des terrains en pente par suite du relevage du carter,
- la nécessité d'une opération de liage intermédiaire, et
- l'opération supplémentaire pour le fermier qui doit délier la balle avant la distribution du fourrage aux animaux.

Le but de l'invention est de concevoir une presse à balles rondes et avec enrubanneuse intégrée qui pallie les inconvénients d'une machine du type de celle décrite dans le document précité, tout en présentant d'autres avantages.

A cet effet, l'invention propose une presse à balles rondes avec enrubanneuse intégrée, du type comprenant une chambre de pressage avec deux convoyeurs supérieur et inférieur pour former entre eux une balle ronde à partir d'un produit végétal ramassé au sol, et un système d'enrubannage de la balle dans le cas de l'ensilage du produit végétal, les convoyeurs supérieur et inférieur restant fixes pendant l'enrubannage de la balle, caractérisée en ce qu'elle comprend un châssis ouvert de forme globalement parallélépipédique rectangle qui est constitué à partir de l'assemblage d'un ensemble de poutrelles pour délimiter notamment un cadre avant associé à une porte avant pivotante et un cadre arrière associé à une porte arrière pivotante, un cadre supérieur et un cadre inférieur en ce que le système d'enrubannage est supporté par le cadre supérieur du châssis -et comprend deux anneaux mobiles en rotation, disposés parallèlement à un plan diamétral de la balle et qui supportent des bobines de film plastique qui s'étendent perpendiculairement à l'axe de rotation de la balle et qui se déroulent autour de celle-ci au cours de la rotation des anneaux,et en ce que les portes sont écartées du châssis pour permettre l'enrubannage de la périphérie et des côtés de la balle, alors que les convoyeurs supérieur et inférieur entraînent en rotation la balle pour maintenir sa forme, son diamètre et sa densité pendant l'enrubannage.

D'une manière générale, La machine est également équipée d'un système de liage de la balle pour regrouper toutes les options possibles au sein d'une même machine, sachant que l'enrubannage de la balle ne nécessite pas une opération de liage intermédiaire.

La chambre de pressage est à volume variable, et le convoyeur inférieur de la chambre est monté pivotant pour décharger la balle qui tombe par gravité sur le sol après l'opération de liage ou d'enrubannage.

D'une manière générale, la machine comprend un châssis ouvert de forme sensiblement parallélépipédique rectangle avec notamment un cadre avant associé à une porte avant pivotante, un cadre arrière associé à une porte arrière pivotante, un cadre supérieur et un cadre inférieur pour délimiter un logement central où est aménagée la chambre de pressage et deux logements latéraux où peuvent venir se loger des rouleaux de film plastique pendant la formation de la balle.

La porte avant supporte à sa partie inférieure un dispositif de coupe ou de hachage, supporte dans sa partie centrale un rouleau transversal de pressage et est montée pivotante à sa partie supérieure autour d'une poutrelle transversale supérieure du cadre avant du châssis.

La porte arrière comprend un cadre constitué de deux éléments tubulaires transversaux supérieur et inférieur et de deux flasques latéraux destinés à s'engager à l'intérieur du logement central pour fermer les deux côtés longitudinaux de la chambre de pressage pendant la formation de la balle, et l'élément tubulaire inférieur supporte l'extrémité d'un bras pivotant armé par un ressort et dont l'autre extrémité porte en rotation au moins un rouleau transversal de pressage qui est destiné à prendre appui sur la balle en cours de sa formation.

Pour l'enrubannage ou le liage de la balle, les portes avant et arrière sont ouvertes simultanément au moyen d'un même dispositif de commande, alors qu'elles sont maintenues fermées au moyen de ressorts pour la formation de la balle.

La chambre de pressage est délimitée par le rouleau de pressage de la porte avant, le rouleau de pressage de la porte arrière, les deux convoyeurs et les deux flasques latéraux de la porte arrière, cette chambre formant une préchambre à volume fixe.

Le système d'enrubannage comprend deux anneaux coaxiaux superposés supérieur et inférieur qui sont mobiles en rotation, supportent chacun les extrémités de deux bobines de film plastique diamétralement opposées et qui s'étendent perpendiculairement à l'axe de rotation de la balle, sont disposés parallèlement au plan diamétral de la balle qui est perpendiculaire aux bobines de film plastique, sont situés légèrement au-dessus de ce plan diamétral, et on un diamètre tel qu'ils entourent la balle après sa formation de manière à ce que les bobines de film plastique soient situées en regard de la balle.

Pendant la formation de la balle, une bobine de film plastique de l'un des anneaux et une bobine de l'autre des anneaux sont logées dans un compartiment latéral du châssis, alors que les autres bobines sont logées dans l'autre compartiment latéral.

Un premier anneau est entraîné en rotation par un premier moteur et entraîne automatiquement en rotation le second anneau après une rotation de l'ordre de 90°, et un second moteur entraîne en rotation le second anneau dans le même sens de rotation que celui imprimé par le premier moteur pour regrouper par deux les bobines de film plastique dans les logements latéraux à la fin de l'opération d'enrubannage.

Une machine intégrée selon l'invention présente de nombreux avantages parmi lesquels il faut notamment citer :
- une seule machine qui peut être utilisée pour n'importe quelle récolte à conserver à l'état sec ou par ensilage,
- la production de balles rondes ayant un diamètre et une densité variables,
- la production d'une balle ronde qui peut être liée ou enrubannée en utilisant un même système qui est alimenté soit à partir de bobines de ficelle pour le liage soit en bobines de film plastique pour enrubannage,
- une excellente visibilité et une bonne manoeuvrabilité pour l'opérateur situé sur le tracteur qui tire la machine,
- en ensilage, la chambre de pressage est complètement ouverte sur chaque côté, ce qui permet une opération d'enrubannage sans détérioration du film plastique,
- le basculement du convoyeur inférieur de la chambre permet le déchargement de la balle sans risque d'endommager le film plastique dans le cas de l'ensilage,
- une bonne stabilité de la machine quelle que soit la pente du terrain,
- aucune perte de temps dans le cas de l'ensilage qui ne nécessite pas une opération intermédiaire de liage de la balle, et
- une machine compacte qui peut recevoir à l'arrière un accumulateur de balles liées et/ou enrubannées.

D'autres caractéristiques, avantages et détails de l'invention ressortiront de la description explicative qui va suivre en référence à des dessins annexés, donnés uniquement à titre d'exemple, et dans lesquels :
- la figure 1 est une vue schématique en perspective du châssis d'une machine selon l'invention,
- la figure 2 est une vue en élévation pour illustrer la structure et le fonctionnement de la machine pendant l'opération de formation d'une balle ronde,
- la figure 3 est une vue semblable à celle de la figure 2 pour illustrer la fin de l'opération de formation de la balle, l'opération d'enrubannage ou de liage de la balle et son évacuation vers le sol,
- la figure 4 est une vue de dessus schématique pour illustrer l'opération d'enrubannage ou de liage de la balle,
- la figure 5 est une vue schématique et partielle du système d'entraînement de l'enrubanneuse, et
- la figure 6 est une vue générale de la machine selon l'invention.

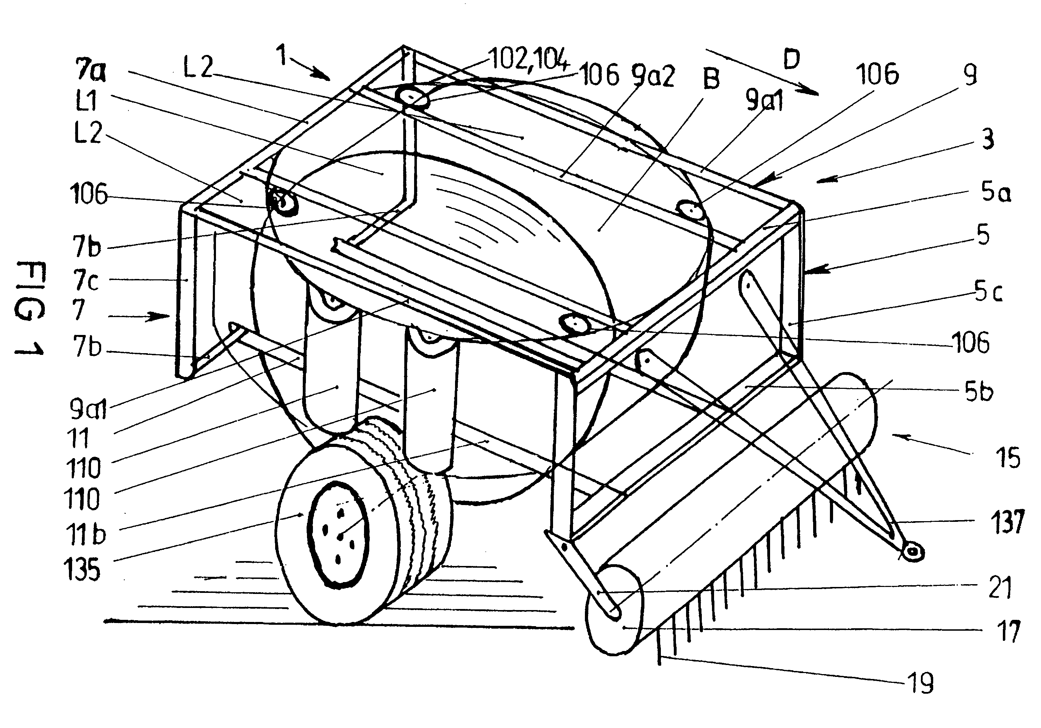

La presse à balles rondes et avec enrubanneuse intégrée selon l'invention et dénommée ci-après la machine 1 comprend un châssis 3 illustré à la figure 1. Le châssis 3 est de forme sensiblement parallélépipédique rectangle et constitué à partir de l'assemblage d'un ensemble de poutrelles pour constituer un châssis ouvert.

En considérant la direction de déplacement D de la machine 1, le châssis 3 est constitué :
- d'un cadre avant 5 formé de deux poutrelles transversales supérieure 5a et inférieure 5b qui sont réunies par deux montants 5c ;
- d'un cadre arrière 7 formé d'une poutrelle transversale supérieure 7a, de deux montants 7c et deux poutrelles transversales inférieures 7b qui sont reliées aux deux montants 7c et dont les deux extrémités libres sont séparées d'une distance d ;
- d'un cadre supérieur 9 formé des deux poutrelles 5a et 7a précitées et de quatre poutrelles longitudinales parallèles, à savoir deux poutrelles longitudinales extérieures 9a1 et deux poutrelles longitudinales intermédiaires 9a2 séparées l'une de l'autre de la distance d, et
- d'un cadre inférieur 11 formé des deux poutrelles inférieures 5b et 7b précitées et de deux poutrelles longitudinales parallèles 11b séparées l'une de l'autre de la distance d et qui relient les extrémités libres des poutrelles 5b et 7b à la poutrelle inférieure 5b du cadre avant 5.

Un tel châssis 3 permet de délimiter un logement central ouvert L1 qui s'étend entre les cadres avant 5 et arrière 7 et de largeur transversale d, et deux logements latéraux ouverts L2.

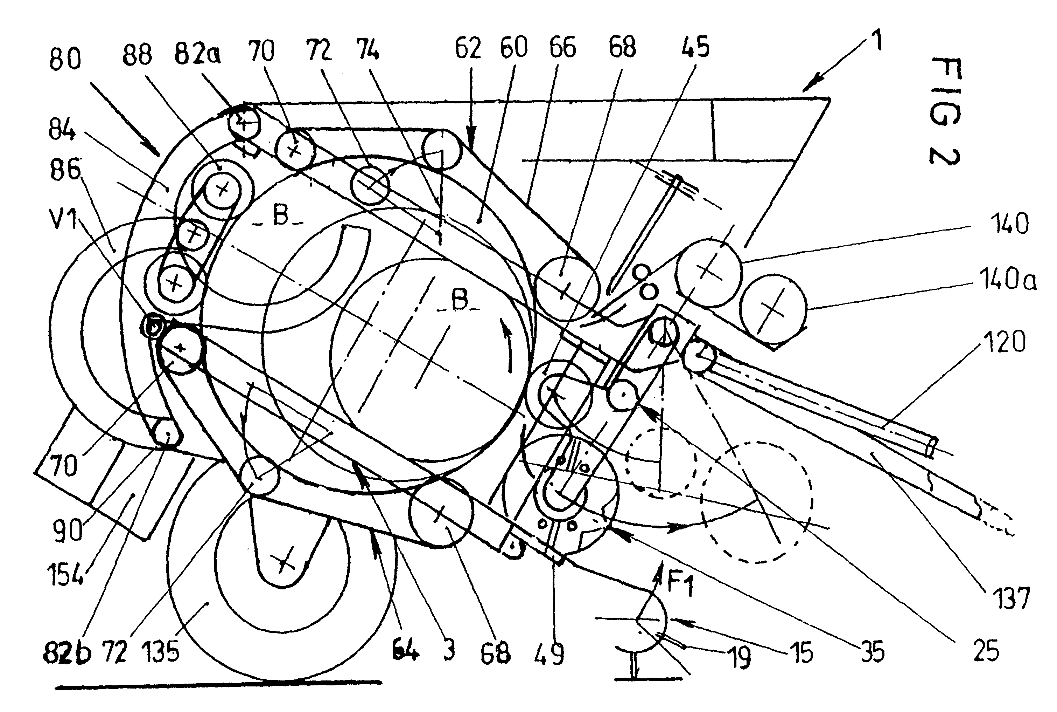

La machine 1 est équipée d'un ramasseur 15 de récolte ou "pick-up", connu en soi, et constitué d'un tambour 17 avec des tiges radiales flexibles 19 en saillie à la surface périphérique du rouleau 17 pour ratisser la récolte qui a été préalablement coupée (figures 1 et 2).

Le ramasseur 15 est monté pivotant à l'avant de la machine 1 entre une position abaissée ou de ratissage (figure 1) et une position relevée ou de transport (matérialisée par la flèche F1 sur la figure 2) au moyen de deux bras 21 qui sont articulés sur la poutrelle inférieure 5b du cadre avant 5 (figure 1).

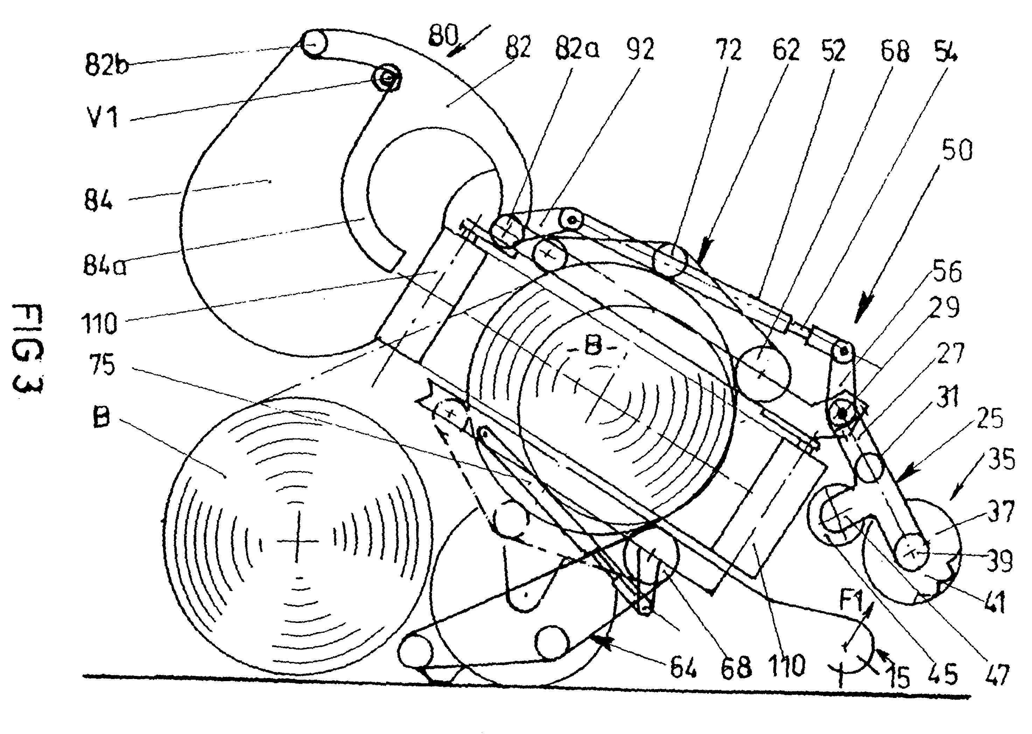

Une porte avant 25 est montée pivotante sur le cadre avant 5 du châssis 3 (figure 3). La porte avant 25 comprend deux montants latéraux 27 reliés l'un à l'autre par une poutrelle centrale 31. La porte avant 25 est montée pivotante au moyen de deux paliers 29 supportés par la poutrelle supérieure 5a du cadre avant 5. Vers son extrémité, la porte avant 25 supporte un dispositif de coupe ou de hachage 35 qui est constitué d'un rotor transversal 37 dont l'arbre 39 est supporté en rotation aux deux extrémités inférieures des deux montants 27 de la porte avant 25. Le rotor 37 est équipé d'une série de couteaux rotatifs 41.

Dans sa partie centrale, la porte avant 25 supporte également un rouleau transversal de pressage 45. Ce rouleau 45 est monté en rotation dans deux paliers supportés par deux bossages 47 en saillie sur les deux montants latéraux 27 de la porte avant 25.

La porte avant 25 est dans une position fermée (figure 2) pendant l'opération de formation de la balle, et pivote d'un angle de l'ordre de 60° pour atteindre une position partiellement relevée (figure 3) pendant l'opération de liage ou d'enrubannage de la balle. Lorsque la porte avant 25 est fermée, elle vient en regard du cadre avant 5 du châssis 3, de manière à ce que :
- le rotor 37 du dispositif de coupe 35 soit positionné en regard d'un contre-couteau transversal 49 fixé sur la poucrelle inférieure 5b du cadre avant 5 pour couper la récolte ratissée par le ramasseur 15, et
- le rouleau de pressage 45 fasse saillie à l'entrée du logement central L1 délimité par le châssis 3.

Comme la fonction coupe est essentiellement utilisée pour l'ensilage, le rotor 37 sera monté de manière à pouvoir pivoter légèrement vers l'arrière pour l'éloigner du contre-couteau 49 afin de neutraliser la fonction coupe.

Le pivotement de la porte avant 25 est commandé par un dispositif d'entraînement 50 supporté par et au-dessus du cadre supérieur 9 (figure 3). Le dispositif d'entraînement 50 comprend deux vérins 52 qui s'étendent parallèlement aux poutrelles du cadre supérieur 9. L'extrémité libre de la tige 54 de chaque vérin 52 est reliée à la porte avant 25 par une biellette articulée 56, de manière à faire pivoter la porte avant 25 autour de la poutrelle transversale supérieure 5a du cadre avant 5.

Les deux vérins 52 sont associés à deux ressorts qui ont pour effet de maintenir la porte avant 25 dans sa position fermée, l'actionnement des vérins 52 n'intervenant que pour l'ouverture de la porte avant 25. En outre, ces ressorts permettent de pouvoir absorber des andains de récolte et des corps étrangers sans dommage pour la machine.

Une chambre de pressage 60 est formée à l'intérieur du logement central L1 du châssis et comprend deux convoyeurs supérieur 62 et inférieur 64 qui sont semblables et respectivement montés sur les cadres supérieur 9 et inférieur il du châssis 3 (figures 2 et 3).

Chaque convoyeur 62,64 est constitué par une série de courroies 66 qui sont enroulées sur un rouleau transversal avant 68 et un rouleau transversal arrière 70 de plus petit diamètre. Les arbres des deux rouleaux 68 et 70 sont respectivement supportés en rotation par des paliers fixés sur le cadre supérieur 9. Les courroies 66 sont entraînées par le rouleau transversal avant 68, et passent également sur un rouleau transversal intermédiaire 72 dont l'arbre d'entraînement est supporté en rotation par le cadre supérieur 9 au moyen de deux bras pivotants 74 associés à deux ressorts, de manière à ce que le rouleau intermédiaire 72 puisse s'écarter vers l'extérieur suivant un arc de cercle comme cela sera explicité plus loin.

A la différence du convoyeur supérieur 62, le convoyeur inférieur 64 est monté pivotant par rapport au cadre inférieur 11 du châssis 3. Plus précisément, le rouleau transversal avant 68 est supporté en rotation par des paliers fixés sur le cadre inférieur 11, mais le rouleau transversal arrière 70 est supporté par deux vérins 75 qui permettent au convoyeur inférieur 64 de pouvoir basculer vers le bas (figure 3).

Avantageusement :
- le rouleau moteur 68 de chaque convoyeur 62,64 est entraîné en rotation dans le sens des aiguilles d'une montre pour que la balle B qui sera formée dans la chambre 60 soit entraînée dans le sens de rotation inverse, et
- chaque convoyeur utilise des courroies et des rouleaux d'entraînement caoutchoutés ayant à leurs contacts des stries à chevron pour assurer un bon guidage et un nettoyage continu des courroies.

Une porte arrière 80 est montée pivotante autour de la poutrelle transversale supérieure 7a du cadre arrière 7 (figures 2 et 3). La porte arrière 80 est formée d'un cadre 82 qui est constitué d'un élément tubulaire transversal supérieur 82a monté en rotation autour de la poutrelle transversale supérieure 7a du cadre arrière 7, d'un élément tubulaire transversal inférieur 82b et de deux flasques latéraux 84 montés entre les deux tubes 82a et 82b. Chaque flasque 84 est constitué par une paroi métallique de forme globalement circulaire qui est destinée à s'engager à l'intérieur du logement central L1 pour fermer la chambre de pressage 60 sur ses deux côtés longitudinaux lors de la formation d'une balle. La paroi extérieure de chaque flasque 84 est avantageusement renforcée par une structure de renfort 84a.

L'élément tubulaire inférieur 82b supporte en rotation un bras 86 qui porte librement deux rouleaux transversaux de pressage 88 destinés à venir en appui sur la balle en formation à l'intérieur de la chambre de pressage 60 sous l'action exercée par des ressorts 90. La porte arrière 80 pivote entre une position fermée (figure 2) pendant la formation de la balle et une position partiellement relevée vers l'arrière (figure 3) pendant l'opération de liage ou d'enrubannage de la balle.

Avantageusement, le pivotement de la porte arrière 80 est également assuré par les vérins 52 qui font pivoter la porte avant 25. Ainsi, les portes avant 25 et arrière 80 seront simultanément commandées pour être soit fermées (figure 2) soit partiellement relevées (figure 3).

A cet effet, les vérins 52 seront à double effet avec chacun une seconde tige de piston articulée à une biellette 92 reliée à la porte arrière 80. Des ressorts sont également prévus pour maintenir la porte arrière 80 dans sa position fermée lorsque les vérins 52 ne sont pas actionnés.

Enfin, on prévoit un dispositif de verrouillage V1 de la porte arrière 80 dans sa position fermée pour rigidifier l'ensemble du châssis 3 lorsque la balle est en formation dans la chambre de pressage.

La machine 1 est complétée par un système d'enrubannage ou de liage 100 qui est illustré sur les figures 1 et 3. Ce système 100 comprend deux anneaux coaxiaux superposés supérieur 102 et inférieur 104. Ces deux anneaux 102 et 104 sont supportés en rotation par le cadre supérieur 9 du châssis 3 et sont chacun guidés par quatre galets 106 qui sont supportés en rotation par les poutrelles intermédiaires 9a2 du cadre supérieur 9. Chaque anneau 102 et 104 supporte les extrémités de deux bobines 110 d'un film plastique diamétralement opposées. Les bobines 110 s'étendent en direction du cadre inférieur 11 et perpendiculairement à l'axe de rotation de la balle. Les deux anneaux 102 et 104 sont disposés parallèlement au plan diamétral de la balle qui est perpendiculaire aux bobines 110, sont situés légèrement au-dessus de ce plan diamétral et on un diamètre tel qu'ils entourent la balle après sa formation de manière à ce que les bobines 110 de film plastique soient situées en regard de la balle.

Ainsi, lorsque les portes avant 25 et arrière 80 seront ouvertes, les deux anneaux 102 et 104 pourront tourner librement autour de la balle.

Lorsque la balle est en formation à l'intérieur de la chambre de pressage 60, les deux anneaux 102 et 104 sont disposés de manière à ce qu'un rouleau 110 de l'anneau 102 et un rouleau 110 de l'anneau 104 viennent en regard ou avantageusement se loger dans un compartiment latéral ouvert L2 du châssis 3, alors que les deux autres rouleaux 110 seront logés dans l'autre compartiment latéral ouvert L2 du châssis 3. Les rouleaux 110 sont ainsi regroupés par deux et il n'y a aucun débordement au-delà du volume défini par le châssis 3, ce qui rend la machine 1 particulièrement compacte.

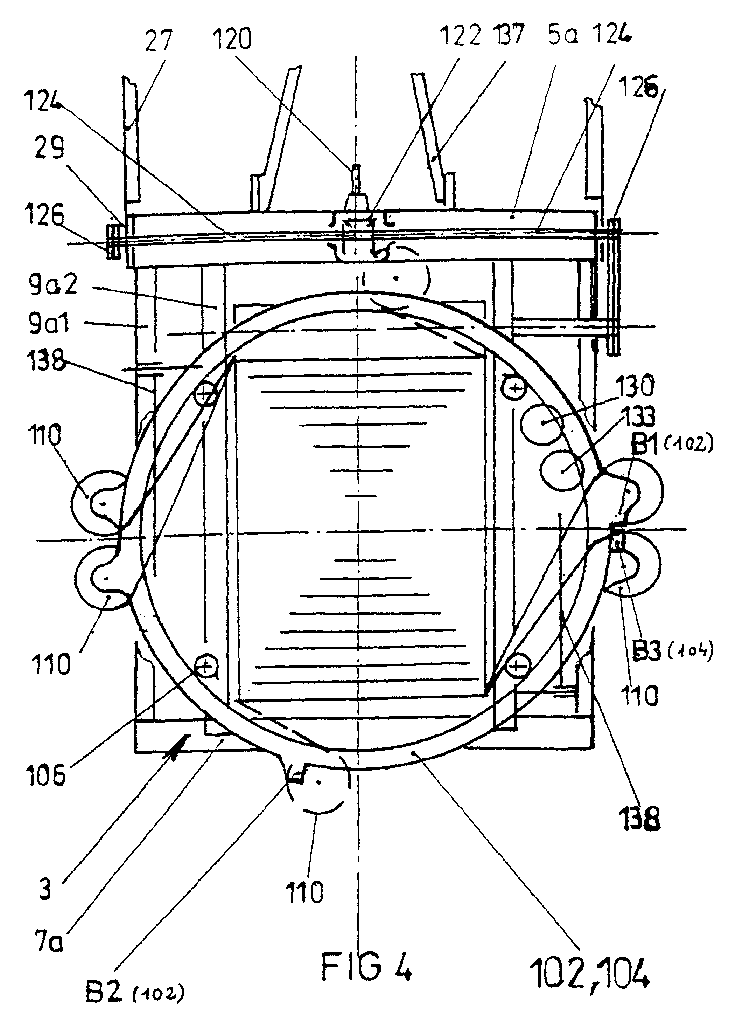

La chaîne cinématique d'entraînement des différents organes de la machine 1 est illustrée à la figure 4. Une prise de force 120 est prévue au niveau du cadre avant 5 du châssis 3. A partir de cette prise de force 120, une boîte d'engrenages 122 à renvoi d'angle entraîne en rotation deux arbres moteurs 124 qui, par l'intermédiaire de chaînes 126, entraînent simultanément en rotation les arbres d'entraînement des rouleaux 68 des convoyeurs 62,64 et l'arbre d'entraînement du rotor 37 du dispositif de coupe 35.

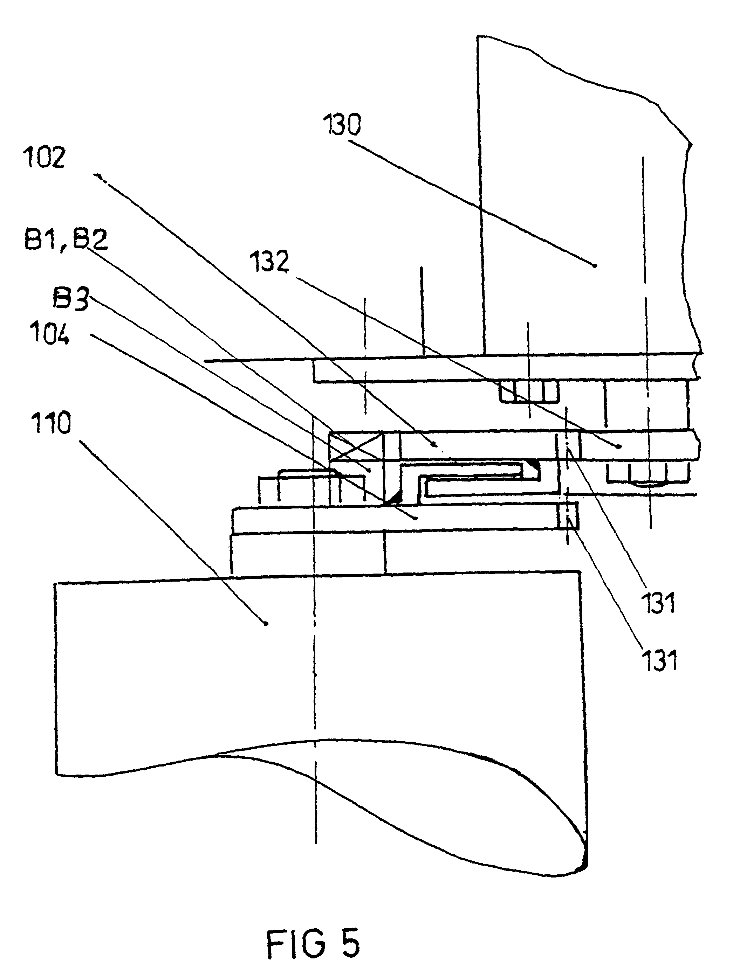

Un premier moteur 130 permet d'entraîner l'un des deux anneaux 102 et 104 pendant l'opération d'enrubannage (figure 5). A cet effet, l'anneau supérieur 102, par exemple, possède une denture 131 sur sa face interne qui engrène un pignon 132 entraîné en rotation par le moteur 130. L'anneau supérieur 102 comporte deux butées B1 et B2 à 90° l'une de l'autre, et l'anneau inférieur 104 comporte une butée B3 qui se situe entre les deux butées B1 et B2. Ainsi, l'anneau inférieur 104 sera entraîné en rotation par l'anneau supérieur 102 lorsque la butée B1 viendra en contact avec la butée B3.

A la fin de l'opération d'enrubannage, un second moteur 133 est prévu pour faire tourner seulement l'anneau inférieur 104 dans le même sens de rotation que celui imprimé par le moteur 130 alors arrêté pour regrouper par deux les rouleaux 110 de film plastique des deux anneaux 102 et 104 dans les logements latéraux L2 du châssis 3 par suite du contact entre les deux butées B3 et B2.

L'équipement de la machine 1 est complété par deux fusées de roues 135 supporté par le cadre inférieur 11 du châssis 3, et par une flèche d'attelage 137 fixée au cadre avant 5 du châssis 3.

En se reportant à la figure 2, lorsque la machine 1 est attelée à un tracteur (non représenté), le châssis 3 est incliné vers l'avant pour permettre le déchargement de la balle sans interférer avec les anneaux d'enrubannage 102 et 104.

En fonctionnement, les portes avant 25 et arrière 80 sont fermées, et le volume de la chambre de pressage 60 est délimité entre les convoyeurs 62 et 64, le rouleau de pressage 45 de la porte avant 25, les rouleaux de pressage 88 et les flasques 84 de la porte arrière 80. La chambre de pressage 60 forme ainsi une préchambre à volume ou diamètre fixe.

La machine 1 ratisse la récolte au moyen du ramasseur 15 au fur et à mesure que la machine 1 avance en étant tirée par un tracteur. Le tambour 17 du ramasseur 15 tourne en rotation dans le sens inverse des aiguilles d'une montre pour soulever la récolte, la faire passer par dessus le tambour 17 et l'envoyer dans le dispositif de coupe 35 qui n'est en principe utilisé que pour l'ensilage.

La récolte éventuellement hachée par le dispositif de coupe 35 s'accumule à l'intérieur de la chambre de pressage 60 en traversant le cadre avant 5 du châssis 3 qui forme l'ouverture d'entrée de la chambre 60.

Les courroies des convoyeurs supérieur 62 et inférieur 64 sont entraînées de manière à ce que la balle B qui va être formée soit entraînée en rotation dans le sens inverse des aiguilles d'une montre.

Tant que la balle B n'a pas atteint le volume de la préchambre, les brins aller et retour des courroies des convoyeurs 62 et 64 restent sensiblement parallèles entre eux.

Une fois que la balle B remplit globalement le volume de la préchambre, elle prend appui sur les convoyeurs 62 et 64, le rouleau de pressage 45 de la porte avant 25 et les rouleaux de pressage 88 de la porte arrière 80, ce qui va avoir pour effet de comprimer la balle B pour la rendre plus dense et plus compacte.

Une fois que la balle B a atteint une certaine densité, l'augmentation du diamètre de la balle B va avoir pour effet de repousser les rouleaux de pressage 88 de la porte arrière 80 et de déformer les courroies du convoyeurs 62 et 64 par suite de l'écartement des rouleaux intermédiaires 72.

Lorsque la balle B a atteint le diamètre souhaité, la machine 1 est stoppée pour procéder à l'opération d'enrubannage dans le cas de l'ensilage.

Pour procéder à cette opération, on actionne les vérins 52 pour ouvrir simultanément les portes avant 25 et arrière 80 pour dégager les rouleaux de pressage 45 et 88, sachant que la balle B est toujours entraînée en rotation par les convoyeurs 62 et 64, ce qui a pour effet de maintenir sa forme, son diamètre et sa densité. Par contre, si le convoyeur supérieur 62 était relevé par exemple, la balle B ne serait plus maintenue et il en résulterait automatiquement une augmentation de son volume de l'ordre de 10 % à 15 %. Pour éviter cela, il faudrait faire une opération de liage intermédiaire avant de procéder à l'enrubannage de la balle, comme dans le cas de l'Art antérieur.

Pour l'opération d'enrubannage de la balle B, on actionne dans un premier temps le premier moteur 130 pour entraîner seulement en rotation l'anneau supérieur 102. Après une rotation de l'ordre de 90°, les quatre rouleaux 110 de film plastique sont régulièrement répartis à 90° autour de la balle B. L'anneau supérieur 102 vient alors entraîner en rotation l'anneau inférieur 104 par suite du contact entre les butées B1 et B3, et les deux anneaux tournent en synchronisme autour de la balle B qui est elle-même entraînée en rotation autour de son axe longitudinal par les convoyeurs 62 et 64 pour effectuer l'enrubannage de la balle B.

Lorsque la balle B est entièrement recouverte par le film plastique, le premier moteur 130 est arrêté, et on commande alors le second moteur 133 dans le même sens de rotation que celui imprimé par le moteur 130 pour entraîner l'anneau inférieur 104 et ramener les bobines 110 de film plastique regroupées par deux dans les logements latéraux L2 du châssis 3 par suite du contact entre les deux butées B3 et B2, et couper les films par un dispositif 138 (figure 4).

Pour décharger la balle enrubannée, on actionne les vérins 75 pour faire basculer vers le bas le convoyeur inférieur 64, les deux convoyeurs 62 et 64 restant en action pour faciliter le déchargement de la balle.

Les portes avant 25 et arrière 80 sont refermées, le convoyeur inférieur 64 reprend sa position initiale et la machine avance à nouveau pour former une autre balle ronde.

En variante :
- on peut remplacer les rouleaux 110 du film plastique par des filets pour enrouler totalement la balle,
- ou dérouler un filet déroulé à partir d'une bobine 140 située à l'avant de la machine (figure 2) pour ne recouvrir que la surface périphérique de la balle (B).

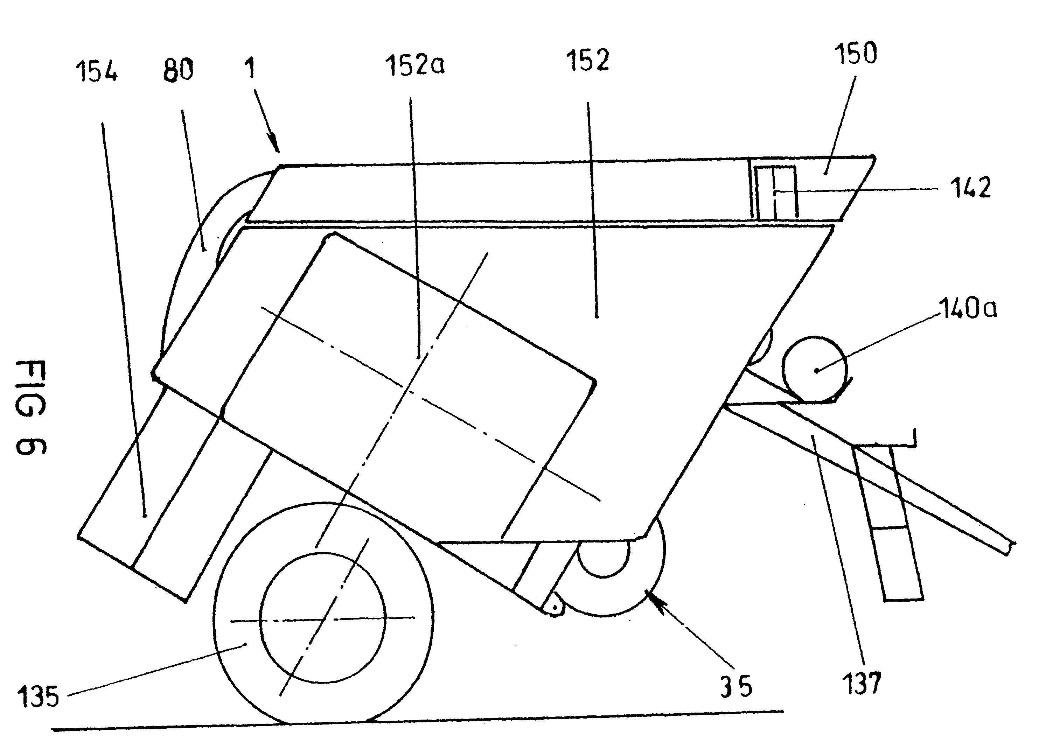

Enfin, une fois la balle formée à partir d'une récolte sèche, on peut procéder uniquement à un liage de la balle au moyen d'une ficelle déroulée à partir d'une bobine 142 située en avant de la machine 1 (figure 6), la ficelle n'entourant la balle B que sur sa périphérie.

Enfin, comme illustré sur la figure 6, l'équipement de la machine 1 est complété par un rouleau de filet de rechange 140a à l'avant de la machine, une réserve 150 de pelotes de ficelle au-dessus de la machine, des portes latérales 152 rapportées de chaque côté du châssis de la machine, ces portes ayant avantageusement une partie transparente 152a. Une réserve 154 de rouleaux de films plastiques est placée à l'arrière et de chaque côté du châssis 3 de la machine.

## Revendications

1. Presse à balles rondes avec enrubanneuse intégrée, du type comprenant une chambre de pressage (60) avec deux convoyeurs supérieur (62) et inférieur (64) pour former entre eux une balle ronde (B) à partir d'un produit végétal ramassé au sol, et un système d'enrubannage (100) de la balle (B) dans le cas de l'ensilage du produit végétal, les convoyeurs supérieur (62) et inférieur (64) restant fixes pendant l'enrubannage de la balle, **caractérisée en ce qu'**elle comprend un châssis ouvert (3) de forme globalement parallélépipédique rectangle qui est constitué à partir de l'assemblage d'un ensemble de poutrelles pour délimiter notamment un cadre avant (5) associé à une porte avant pivotante (25) et un cadre arrière (7) associé à une porte arrière pivotante (80), un cadre supérieur (9) et un cadre inférieur (11), **en ce que** le système d'enrubannage (100) est supporté par le cadre supérieur (9) du châssis (3) et comprend deux anneaux (102, 104) mobiles en rotation, disposés parallèlement à un plan diamétral de la balle (B) et qui supportent des bobines (110) de film plastique qui s'étendent perpendiculairement à l'axe de rotation de la balle (B) et qui se déroulent autour de celle-ci au cours de la rotation des anneaux (102, 104), et **en ce que** les portes (25, 80) sont écartées du châssis (3) pour permettre l'enrubannage de la périphérie et des côtés de la balle (B), alors que les convoyeurs supérieur (62) et inférieur (64) entraînent en rotation la balle pour maintenir sa forme, son diamètre et sa densité pendant l'enrubannage.

2. Presse à balles rondes avec enrubanneuse intégrée selon la revendication 1, **caractérisée en ce que** la chambre de pressage (60) est à volume fixe ou variable.

3. Presse à balles rondes avec enrubanneuse intégrée selon la revendication 1 ou 2, **caractérisée en ce que** le convoyeur inférieur (64) de la chambre de pressage (60) est monté pivotant pour pouvoir libérer la balle (B) après son enrubannage ou son liage.

4. Presse à balles rondes avec enrubanneuse intégrée selon l'une quelconque des revendications 1 à 3, **caractérisée en ce que** le châssis (3) délimite un logement central (L1) où est aménagée la chambre de pressage (60) et deux logements latéraux (L2) où sont logés des rouleaux (110) de film plastique pendant la formation de la balle (B).

5. Presse à balles rondes avec enrubanneuse intégrée selon l'une quelconque des revendications précédentes, **caractérisée en ce que** la porte avant (25) supporte à sa partie inférieure un dispositif de coupe ou de hachage (35), supporte dans sa partie centrale un rouleau transversal de pressage (45) et est montée pivotante à sa partie supérieure autour d'une poutrelle transversale supérieure (5b) du cadre avant (5) du châssis (3).

6. Presse à balles rondes avec enrubanneuse intégrée selon la revendication 5, **caractérisée en ce que** la porte avant (25) est dans une position fermée en regard du cadre avant (5) lors de la formation de la balle (B), et dans une position basculée en avant du cadre avant lors de l'enrubannage de la balle (B).

7. Presse à balles rondes avec enrubanneuse intégrée selon l'une quelconque des revendications précédentes, **caractérisée en ce que** la porte arrière (80) comprend un cadre (82) constitué de deux éléments tubulaires transversaux supérieur (82a) et inférieur (82b) et de deux flasques latéraux (84) destinés à s'engager à l'intérieur du logement central (L1) pour fermer les deux côtés longitudinaux de la chambre de pressage (60) pendant la formation de la balle (B).

8. Presse à balles rondes avec enrubanneuse intégrée selon la revendication 7, **caractérisée en ce que** l'élément tubulaire inférieur (82b) supporte un bras pivotant (86) qui porte en rotation au moins un rouleau transversal de pressage (88) armé par un ressort (90) et destiné à prendre appui sur la balle (B) en cours de sa formation.

9. Presse à balles rondes avec enrubanneuse intégrée selon l'une quelconque des revendications précédentes, **caractérisée en ce que** la porte arrière (80) est dans une position fermée en regard du cadre arrière (7) lors de la formation de la balle (B), et dans une position basculée en arrière du cadre arrière (7) lors de l'enrubannage de la balle (B).

10. Presse à balles rondes avec enrubanneuse intégrée selon l'une quelconque des revendications précédentes, **caractérisée en ce que** la porte arrière (80) est bloquée en position de fermeture par un dispositif de verrouillage (V1).

11. Presse à balles rondes avec enrubanneuse intégrée selon l'une quelconque des revendications précédentes, **caractérisée en ce que** les positions des portes avant (25) et arrière (80) sont commandées simultanément au moyen d'un même dispositif de commande (50).

12. Presse à balles rondes avec enrubanneuse intégrée selon la revendication 11, **caractérisée en ce que** le système de commande (50) est constitué par au moins un vérin (52) à double effet, et part des ressorts pour solliciter les portes avant et arrière (25, 80) en position de fermeture tout en permettant à la porte avant (25) de pivoter pour absorber des andains de récolte ou des corps étrangers.

13. Presse à balles rondes avec enrubanneuse intégrée selon l'une quelconque des revendications 5 à 12, **caractérisée en ce que** la chambre de pressage (60) est délimitée par le rouleau de pressage (45) de la porte avant (25), le rouleau de pressage (88) de la porte arrière (80), les deux convoyeurs (62, 64) et les deux flasques latéraux (84) de la porte arrière (80), cette chambre (60) formant une préchambre à volume fixe.

14. Presse à balles rondes avec enrubanneuse intégrée selon l'une quelconque des revendications précédentes, **caractérisée en ce que** les convoyeurs supérieur (62) et inférieur (64) sont à courroies enroulées autour de deux rouleaux d'extrémité (68, 70) et d'un rouleau intermédiaire (72) pouvant s'écarter vers l'extérieur lors de l'augmentation du diamètre de la balle (B).

15. Presse à balles rondes avec enrubanneuse intégrée selon l'une quelconque des revendications précédentes, **caractérisée en ce que** chaque anneau (102, 104) du système d'enrubannage (100) supporte les extrémités de deux bobines (110) de film plastique diamétralement opposées.

16. Presse à balles rondes avec enrubanneuse intégrée selon la revendication 15, **caractérisée en ce que** les deux anneaux (102, 104) sont disposés parallèlement au plan diamétral de la balle qui est perpendiculaire aux bobines (110), sont situés légèrement au-dessus de ce plan diamétral et ont un diamètre tel qu'ils entourent la balle après sa formation.

17. Presse à balles rondes avec enrubanneuse intégrée selon la revendication 16, **caractérisée en ce qu'**une bobine (110) de film plastique de l'un des anneaux (102, 104) et une bobine (110) de l'autre des anneaux (102, 104) sont logées dans un compartiment latéral (L2) du châssis (3), alors que les autres bobines (110) sont logées dans l'autre compartiment latéral (L2), pendant la formation de la balle (B).

18. Presse à balles rondes avec enrubanneuse intégrée selon la revendication 17, **caractérisée en ce que** le premier anneau (102) est entraîné en rotation par un premier moteur (130) et entraîne automatiquement en rotation le second anneau (104) après une rotation de l'ordre de 90° au moyen de butées (B1, B2, B3).

19. Presse à balles rondes avec enrubanneuse intégrée selon la revendication 18, **caractérisée en ce qu'**un second moteur (133) entraîne en rotation le second anneau (104) dans le même sens de rotation que celui imprimé par le premier moteur (130) pour regrouper par deux les quatre bobines (110) de film plastique dans les logements latéraux (L2) à la fin de l'opération d'enrubannage.

## Patentansprüche

1. Rundballenpresse mit integrierter Umhüllungsvorrichtung von der Sorte mit einer Preßkammer (60) mit einer oberen (62) und einer unteren (64) Fördervorrichtung, um zwischen diesen aus einem vom Boden aufgelesenen pflanzlichen Produkt einen runden Ballen (B) zu formen und einem Umhüllungssystem (100) für den Ballen (B) für den Fall der Einlagerung des pflanzlichen Produktes, wobei die obere (62) und untere (64) Fördervorrichtung während des Umhüllens des Ballens (B) feststehen, **dadurch gekennzeichnet, daß** sie ein offenes Fahrgestell (3) mit im wesentlichen der Form eines rechtwinkligen Parallelepipeds aufweist, das aus einer zusammengebauten Einheit von Trägern besteht, die einen einer schwenkbaren vorderen Tür (25) zugeordneten vorderen Rahmen (5) und einen einer schwenkbaren hinteren Tür (80) zugeordneten hinteren Rahmen (7) sowie einen oberen (9) und einen unteren Rahmen (11) ausbilden, daß das Umhüllungssystem (100) von dem oberen Rahmen (9) des Fahrgestells (3) getragen wird und zwei drehbar bewegliche Ringe (102, 104) umfaßt, die parallel zu einer diametralen Ebene des Ballens (B) angeordnet sind und die Rollen (110) mit Plastikfilm tragen, welche rechtwinklig zu der Drehachse des Ballens (B) erstrecken und die sich bei Drehung der Ringe (102, 104) um diesen abrollen, und daß die Türen (25, 80) von dem Fahrgestell (3) beabstandet sind, um das Umhüllen des Umfanges und der Seiten des Ballens (B) zu ermöglichen, während die obere (62) und die untere (64) Fördervorrichtung den Ballen (B) in Drehung versetzen, um dessen Form, Durchmesser und Dichte während des Umhüllens zu erhalten.

2. Rundballenpresse mit integrierter Umhüllungseinrichtung gemäß Anspruch 1, **dadurch gekennzeichnet, daß** die Preßkammer (60) ein festes oder ein variables Volumen aufweist.

3. Rundballenpresse mit integrierter Umhüllungseinrichtung gemäß Anspruch 1 oder Anspruch 2, **dadurch gekennzeichnet, daß** die untere Fördervorrichtung (64) der Preßkammer (60) schwenkbar montiert ist, um den Ballen (B) nach seinem Umhüllen oder Binden freizugeben.

4. Rundballenpresse mit integrierter Umhüllungseinrichtung gemäß einem der Ansprüche 1 bis 3, **dadurch gekennzeichnet, daß** das Fahrgestell (3) einen zentralen Raum (L1), in dem die Preßkammer (60) angeordnet ist, und zwei seitliche Räume (L2), in denen die Rollen (110) mit Plastikfilm während des Umhüllens des Ballens (B) angeordnet sind, umgrenzt.

5. Rundballenpresse mit integrierter Umhüllungseinrichtung gemäß einem der vorhergehenden Patentansprüche, **dadurch gekennzeichnet, daß** die vordere Tür (25) in ihrem unteren Bereich eine Schneide- oder Hackvorrichtung (35) trägt, in ihrem mittleren Bereich eine quer angeordnete Rolle (45) zum Pressen trägt und in ihrem oberen Bereich schwenkbar um einen oberen Querbalken (5b) des vorderen Rahmens (5) des Fahrgestells (3) befestigt ist.

6. Rundballenpresse mit integrierter Umhüllungseinrichtung gemäß Anspruch 5, **dadurch gekennzeichnet, daß** die vordere Tür (25) sich während des Wickelns des Ballens (B) im geschlossener Stellung gegenüber dem vorderen Rahmen (5) befindet und während des Umhüllens des Ballens (B) in einer vor den vorderen Rahmen geschwenkten Stellung befindet.

7. Rundballenpresse mit integrierter Umhüllungseinrichtung gemäß einem der vorhergehenden Patentansprüche, **dadurch gekennzeichnet, daß** die hintere Tür (80) einen Rahmen (82) umfaßt, der aus einem oberen (82a) und einem unteren (82b) quer angeordneten röhrenförmigen Element und aus zwei seitlichen Scheiben (84) besteht, die in den Innenbereich des zentralen Raumes (L1) eintreten können, um die beiden Längsseiten der Preßkammer (60) während des Wickelns des Ballens (B) zu verschließen.

8. Rundballenpresse mit integrierter Umhüllungseinrichtung gemäß Anspruch 7, **dadurch gekennzeichnet, daß** das untere röhrenförmige Element (82b) einen Schwenkarm trägt, der mindestens eine drehbare quer angeordnete Preßrolle (88) trägt, die mit einer Feder (90) beaufschlagt ist und die dazu bestimmt ist, während des Wickelns auf den Ballen (B) zu drücken.

9. Rundballenpresse mit integrierter Umhüllungseinrichtung gemäß einem der vorhergehenden Patentansprüche, **dadurch gekennzeichnet, daß** die hintere Tür (80) sich während des Wickelns des Ballens (B) im geschlossener Stellung gegenüber dem hinteren Rahmen (5) befindet und während des Umhüllens des Ballens (B) in einer hinter den hinteren Rahmen (7) geschwenkten Stellung befindet.

10. Rundballenpresse mit integrierter Umhüllungseinrichtung gemäß einem der vorhergehenden Patentansprüche, **dadurch gekennzeichnet, daß** die hintere Tür (80) durch eine Schließvorrichtung (V1) in geschlossener Stellung gehalten wird.

11. Rundballenpresse mit integrierter Umhüllungseinrichtung gemäß einem der vorhergehenden Patentansprüche, **dadurch gekennzeichnet, daß** die Stellungen der vorderen (25) und der hinteren Tür (80) gleichzeitig mittels einer Steuerungsvorrichtung (50) gesteuert werden.

12. Rundballenpresse mit integrierter Umhüllungseinrichtung gemäß Patentanspruch 11, **dadurch gekennzeichnet, daß** die Steuerungsvorrichtung (50) aus mindestens einem doppelt wirkenden Druckzylinder (52) und aus Federn zum Beaufschlagen der vorderen und hinteren Tür (25, 80) in geschlossener Stellung besteht, wobei die vordere Tür (25) schwenkbar bleibt, um die Ernteschwaden oder Fremdkörper zu absorbieren.

13. Rundballenpresse mit integrierter Umhüllungseinrichtung gemäß einem der Patentansprüche 5 bis 12, **dadurch gekennzeichnet, daß** die Preßkammer (60) von der Preßrolle (45) der vorderen Tür (25), der Preßrolle (88) der hinteren Tür (80), den beiden Fördervorrichtungen (62,64) und den beiden seitlichen Scheiben (84) der hinteren Tür (80) begrenzt ist, wobei diese Preßkammer eine Vorkammer mit festem Volumen ist.

14. Rundballenpresse mit integrierter Umhüllungseinrichtung gemäß einem der vorhergehenden Patentansprüche, **dadurch gekennzeichnet, daß** die obere (62) und die untere (64) Fördervorrichtung mit Riemen versehen sind, die um zwei Endrollen (68, 70) und eine Zwischenrolle (72), die sich nach außen verschieben kann, wenn der Durchmesser des Ballens (B) zunimmt, gelegt sind.

15. Rundballenpresse mit integrierter Umhüllungseinrichtung gemäß einem der vorhergehenden Patentansprüche, **dadurch gekennzeichnet, daß** jeder der Ringe (102, 104) des Umwicklungssystems (100) die sich gegenüberliegenden Enden der beiden Rollen (110) mit Plastikfilm abstützt.

16. Rundballenpresse mit integrierter Umhüllungseinrichtung gemäß Patentanspruch 15, **dadurch gekennzeichnet, daß** die beiden Ringe (102, 104) parallel zu der Querschnittsebene des Ballens angeordnet sind und senkrecht zu den Rollen (110) sowie leicht oberhalb der Querschnittsebene angeordnet sind und einen derartigen Durchmesser aufweisen, daß sie den Ballen nach seiner Wicklung umfassen.

17. Rundballenpresse mit integrierter Umhüllungseinrichtung gemäß Patentanspruch 16, **dadurch gekennzeichnet, daß** während des Wickelns des Ballens (B) eine Rolle (110) mit Plastikfilm eines der Ringe (102, 104) und eine Rolle (110) des anderen Rings (102, 104) in einem seitlichen Raum (L2) des Fahrgestells (3) angeordnet sind, wohingegen die anderen Rollen (110) in dem anderen seitlichen Raum (L2) angeordnet sind.

18. Rundballenpresse mit integrierter Umhüllungseinrichtung gemäß Patentanspruch 17, **dadurch gekennzeichnet, daß** der erste Ring (102) durch einen ersten Motor (130) in Drehbewegung versetzt wird und dieser automatisch den zweiten Ring (104) nach einer Drehung um etwa 90° mittels Anschlägen (B1, B2, B3) in Drehbewegung versetzt.

19. Rundballenpresse mit integrierter Umhüllungseinrichtung gemäß Patentanspruch 18, **dadurch gekennzeichnet, daß** ein zweiter Motor (133) den zweiten Ring (102) in gleicher Drehrichtung wie die von die von dem ersten Motor (130) verliehene Drehbewegung versetzt, um am Ende des Umhüllungsvorgangs die vier Rollen (110) mit Plastikfilm paarweise in den seitlichen Räumen (L2) zu gruppieren.

## Claims

1. Round baler with integrated wrapper including a pressing chamber (60) with two upper (62) and lower (64) conveyers to form between them a round bale (B) from a vegetable material picked-up on the ground and a wrapping device (100) of the bale (B) in case of silage of this vegetable product, the upper (62) and lower (64) conveyors staying fixed during the bale wrapping, **characterized by** which include an open main frame (3) in the mass of rectangule parallelepiped shape composed of small beams assembly to delimit especially a front frame (5) associated to a front pivoting door (25) and a rear frame (7) associated to a rear pivoting door (80), an upper frame (9) and a lower frame (11) in which the wrapping device (100) is supported by the upper frame (9) of the main frame (3) and include two rings (102, 104) movable in rotation, located parallel to a diametral plan of the bale (B) and supporting the plastic film rolls (110) extending perpendicularly to the bale (B) rotation axis and being unwinded around the bale (B) during the rotation of the rings (102, 104), the doors (25, 80) being kept away of the main frame (3) to allow the wrapping of the periphery and the sides of the bale (B) while the upper (62) and lower (64) conveyors drive the bale in rotation to maintain its shape, its diameter and density during wrapping.

2. Round baler with integrated wrapper according the claim 1, caracterized by which the pressing chamber (60) is a fixed or variable chamber type.

3. Round baler with integrated wrapper according the claim 1 or 2, caracterized by which the lower converyor (64) of the pressing chamber (60) is tiltable to release the bale (B) after wrapping or tying operations.

4. Round baler with integrated wrapper according to whatever claims 1 to 3, caracterized in which the main frame (3) delimit a central room (L1) where are located the pressing chamber (60) and two lateral space (L2) storing the plastic film rolls during the bale formation.

5. Round baler with integrated wrapper according to whatever prior claims, caracterized in which the front door (25) support in its lower part a cutting device (35), support in its midle a pressing roll (45) and pivot in its upper part around an upper cross beam (5b) of the front frame (5) of the main frame (3).

6. Round baler with integrated wrapper according to the claim 5, caracerized in which the front door (25) is in closed position regarding the front frame (5) during the bale formation and pivoted to the front of the front frame during the bale wrapping.

7. Round baler with integrated wrapper according to whatever prior claims, caracterized in which the rear door (80) include a frame (82) composed of two upper (82a) and lower (82b) cross tubes and two lateral side sheets (84) intended to enter inside the central room (L1) to close both longitudinal sides of the pressing chamber (60) during the bale formation.

8. Round baler with integrated wrapper according to the claim 7, caracterized in which the lower tube element (82b) support a pivoting arm (86) which support in rotation at least a cross pressing roll (88) actuated by a spring (90) to press it on the bale (B) during bale formation.

9. Round baler with integrated wrapper according to whatever prior claims, caracterized in which the rear door (80) is in closed position regarding the rear frame (7) during the bale formation and in pivoted position to the rear regarding the rear frame (7) during the bale wrapping operation.

10. Round baler with integrated wrapper according to whatever prior claims, caracterized in which the rear door (80) is locked in closed position by a locking device (V1).

11. Round baler with integrated wrapper according to whatever prior claims, caracterized in which the front (25) and rear (80) door position are simultaniously activated by the same driving device (50).

12. Round baler with integrated wrapper according to the claim 11, caracterized in which the driving device (50) is composed by at least one hydraulic cylinder (52) with double effect and by springs insuring the front and rear (25, 80) doors closing position while allowing the front door (25) to pivot in order to absorb the windrows and foreign bodies.

13. Round baler with integrated wrapper according the claims 5 to 12, caracterized in which the pressing chamber (60) is delimited by the pressing roll (45) of the front door (25), the pressing roll (88) of the rear door (80), both conveyors (62, 64) and the two tateral side sheets (84) of the rear door (80), this pressing chamber (60) forming a prechamber at fixed volume.

14. Round baler with integrated wrapper according to whatever prior claims, caracterized in which the upper (62) and lower (64) conveyors are some belts rolled arround two outer rolls (68, 70) and an intermediate roll (72) being able to move outside while the bale diameter increase.

15. Round baler with integrated wrapper according to whatever prior claims, caracterized in which each ring (102, 104) of the wrapping device (100) support both ends of the two plastic film rolls (110) diametrically opposite.

16. Round baler with integrated wrapper according to the claim 15, caracterized in which both rings (102, 104) are located parallel to the diametral plan of the bale being perpendicular to the rolls (110) are located slightly above this diamentral plan and have a diameter large enough to encircle the bale after its formation.

17. Round baler with integrated wrapper according to the claim 16, caracterized in which one plastic film roll (110) of one of the ring (102,104) and one roll (110) of the other ring (102, 104) are located in the lateral space (L2) of the main frame (3) while the other rolls (110) are located in the other lateral space (L2) during the bale formation.

18. Round baler with integrated wrapper according to the claim 17, caracterized in which the first ring (102) is driven in rotation by a first motor (130) and drive automaticaly in rotation the second ring (104) after a rotation of approximatly 90° by stop means (B1, B2, B3).

19. Round baler with integrated wrapper according to the claim 18, caracterized in which a second motor (133) drive in rotation the second ring (104) in the same direction of the first motor (130) to regroup by two the four plastic film rolls (110) in their lateral space (L2) at the end of the wrapping operation.
